# EUROPEAN PATENT APPLICATION

(11) **EP 0 669 378 A1**
(43) Date of publication of application: **30.08.1995**
(21) Application number: 95301202.8
(22) Date of filing: 23.02.1995
(51) Int. Cl.: C08L 95/00, C08K 3/26, C08K 7/02, C08K 13/04, E01C 19/10

(54) **Road surfacing compounds**

(30) Priority: 23.02.1994 GB 9403394
(71) Applicant: Excel Industries Limited, Gwent NP3 5SD (GB)
(72) Inventor: Leaver, Roger John, Monmouth, Gwent, NP5 3HT (GB)
(74) Representative: Newell, William Joseph

(57) **Abstract**

A road surfacing compound eg. a bitumen-based compound is made by introducing into said compound during the production thereof a mixture comprising a generally fibrous material (eg. cellulose or mineral fibres) and a finely divided filler material (eg. limestone or hydrated lime).

## Description

This invention relates to methods for producing road surfacing compounds such as asphalt, and to component mixtures for such compounds.

There is a trend throughout the world towards the use of newly developed types of road surfacing compound which have special properties. The two most common of these are called porous asphalt and split mastic asphalt. Porous asphalt has a very open texture which allows rainwater to pass freely through, thus providing spray-free driving. The open texture is also effective in absorbing sound energy thereby substantially reducing traffic noise. Split mastic asphalt is a very hard-wearing top surface which can be applied in thin layers. The benefits of this system have been proven, particularly in Germany and Scandinavia, in the latter case proving to be effective in extremes of temperature, particularly, where metal-studded tyres are used in ice and snow conditions.

The use of cellulose fibres in these road surfacing compounds is well-established. Cellulose fibres serve to increase the viscosity of the bitumen binder, enabling higher concentrations to be obtained in the mix. The fibre itself is sometimes produced from recycled paper and is a low density, dry, wool-like material.

The major problem with using cellulose fibres in these applications is that of finding a suitable method of introducing the fibres to the mix. Several solutions have been tried, all of which have disadvantages. In one method the fibres are packed in low-melt polyethylene bags. A bag of the correct weight is dropped into each mix, and the bag melts and the fibres disperse. This method is labour-intensive, requiring small packages (3-9 Kg generally) to be handled manually. It can only be used on batch plants, and not on continuous drum plants which require a steady and continuous feed of fibre. Also, the cellulose fibres can easily become sodden if left around a bitumen plant which means that they do not disperse properly in the bitumen. Furthermore, even when in prime condition, the fibres take an appreciable time to disperse throughout the mix, typically 60 seconds.

We have tried using pneumatic blowing. Here fibres in large bales or "big bags" are "opened up" in a hopper by an agitation method, and then dosed via a rotary valve into an airstream which conveys the fibre to the asphalt mix. The method, whilst being less labour intensive, still involves a new process which has to be controlled. Also the use of dry loose fibres in adverse external conditions of wind and rain is not always ideal.

In another method, fibres, mixed with bitumen or other binders, are pelletised and added to the mixer in pellet form. Whilst being convenient from the handling point of view, the pelletising process is expensive and the pellets themselves can be difficult to disperse in the mix, and can lose performance due to fibre damage caused by the pelletising process. In all methods good dispersion is important otherwise the road surface has "bitumen rich" areas which have poor drainage and poor grip properties.

A need therefore exists for a method of introducing fibres into a road surfacing compound which provides good dispersion whilst at least alleviating the difficulties encountered with the methods outlined above, and ideally substantially reducing the mixing time. The mixing time is extremely important and often the dominant if not the only factor which determines the speed of production of the asphalt mix.

Accordingly, in one aspect, this invention provides a method of introducing fibrous material into a road surfacing compound (such as eg. a bitumen-based compound) during production thereof, which comprises introducing into said compound a mixture comprising a generally fibrous material and a finely divided filler material.

We have found that by mixing the fibrous material with a filler material, handling, measuring and dispensing of the material are much easier. Despite an initial technical prejudice that mixing the fibrous material with the filler material might severely degrade the flow characteristics of the latter material, meaning that conventional storage, distribution and measuring techniques might not be usable, we have found that this is not so. Also the filler material assists even dispersion of the fibres, thus helping to reduce the mixing time.

The filler material is preferably an ingredient of the road surfacing compound. In this way, the fibrous material/filler material mixture may be stored and measured using the same or similar equipment to that employed for the filler material alone.

Thus the filler material may comprise finely divided limestone preferably having a mean particle size in the range of from 20µm to 80µm and ideally about 50µm.

Alternatively, it may comprise finely divided hydrated lime of similar particle size to that described above.

The filler material may be produced in a conventional manner and then blended together with the fibrous material in the appropriate ratio and stored as a component mixture ready for use. The ratios will vary widely according to the intended use, the required amounts of the filler and fibres in the compound the nature of the filler material and so on, and the selection of appropriate proportions is within the competence of someone familiar with fibre-containing asphalt compounds. A typical blend where the filler is hydrated lime is 0.3% fibres and 2% hydrated lime by weight of the road surfacing compound, and where the filler is limestone, 0.3% fibres and 8% limestone.

The fibres of the fibrous material preferably have a mean length in the range from 200µm to 800µ and ideally about 500µm. The fibres are preferably cellulose fibres but other sources of fibres may be used, for example mineral fibres.

In another aspect, this invention provides a component mixture for a road surfacing compound comprising a mixture of a generally fibrous material and a finely divided filler material.

The characteristics of the component mixture are preferably as set out above.

Whilst the invention has been described above it extends to any inventive combination of the features described above or in the following examples.

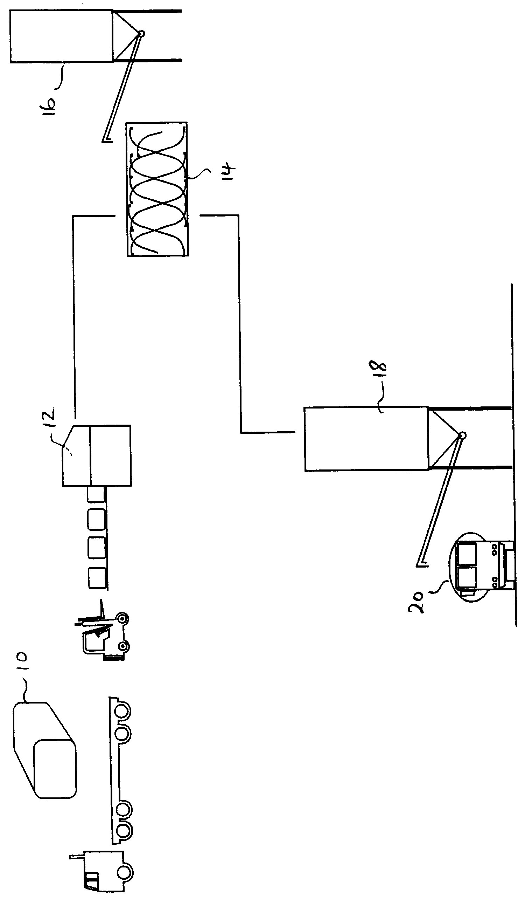

The invention may be performed in various ways and examples thereof will now be described, reference being made to the accompanying drawing, which is schematic view of production of the fibre/filler mixture which is later introduced into the road-surfacing compound during production thereof.

### EXAMPLE 1

300 Kg bales 10 of cellulose fibres are fed into a blowing machine 12 which separates the fibres and feeds them in controlled manner into an archimedes screw mixer 14 together with the appropriate amount of limestone from a hopper or silo 16 produced in the normal way by grinding and screening. The mixture is then stored in a hopper or silo 18 to await transport by bulk tanker 20 to the asphalt plant. The mixture is added cold into the mix, in the same way as the filler material in conventional methods, to produce the final compound.

By mixing the fibres with a filler, a product can be provided which is used in similar way as a conventional filler but the filler/fibre mixture gives improved dispersion of the fibres thus enhancing the quality of the final product and reducing cycle times typically to 45 - 50 seconds, which is of crucial importance in this industry.

### EXAMPLE 2

In this example, the fibres were introduced into a full-scale processing plant to produce the fibre/filler mixture. Hydrated lime was fed from a silo along a screw conveyor. The fibre was pneumatically blown along a 75mm feed pipe using a blowing machine. The fibre feed pipe was vented into the screw conveyor just after the point where the filler was added. Mixing was effected by the transporting action of the screw conveyor, which discharged into an overhead bunker designed to provide a loading facility for bulk tankers.

The mixture was found to flow into the tanker satisfactorily and, after transporting over some 80Km to the asphalt plant, was checked and seen to be in a homogenous state, i.e. no segregation had taken place. The load was satisfactorily discharged into a silo at the asphalt plant where it was held in storage for a time.

Manufacture of a formulation of porous asphalt then took place, using an addition rate of 2.3% of the mixture, together with a binder content of about 5%. The finished product was transported by lorry and then laid in a section of pavement to assess its handling and performance characteristics. It was observed that the physical appearance was very uniform, indicating good dispersion of the fibres. Laboratory tests were conducted on samples taken and these confirmed that the porous asphalt was within specification. In particular, a binder drainage test prescribed by the British Department of Transport was used to show that the addition of fibres in this way produces a road surfacing compound of performance within laid down tolerances and of consistent quality.

## Claims

1. A method of introducing fibrous material into a road surfacing compound during production thereof, which comprises introducing into said compound a mixture comprising a generally fibrous material and a finely divided filler material.

2. A method according to Claim 1, wherein said filler material comprises finely divided limestone, preferably having a mean particle size in the range of from 20µm to 80µm and ideally about 50µm.

3. A method according to Claim 1, wherein said filler material comprises finely divided hydrated lime, preferably having a mean particle size in the range of from 20µm to 80µm and ideally about 50µm.

4. A method according to Claim 2, wherein the road surfacing compound comprises about 0.3% fibrous material and about 8% limestone, by weight.

5. A method according to Claim 3, wherein the road surfacing compound comprises about 0.3% fibrous material and about 2% hydrated lime, by weight.

6. A method according to any preceding Claim, wherein the fibres of the fibrous material preferably have a mean length in the range from 200µm to 800µ and ideally about 500µm.

7. A method according to any preceding Claim, wherein the fibrous material comprises cellulose fibres, or mineral fibres.

8. A component compound for making a road surfacing compound, said component compound comprising a mixture of a generally fibrous material and a finely divided filler material.

9. A component compound according to Claim 8, wherein said fibrous material comprises loose cellulose fibres or loose mineral fibres.

10. A component compound according to Claim 8 or Claim 9, wherein said filler material comprises finely divided limestone or hydrated lime.
